# EUROPÄISCHE PATENTSCHRIFT

(11) **EP 0 643 291 B1**
(45) Veröffentlichungstag und Bekanntmachung des Hinweises auf die Patenterteilung: **30.12.1998**
(21) Anmeldenummer: 93810638.2
(22) Anmeldetag: 09.09.1993
(51) Int. Cl.: G01L 23/08, G01L 19/08, G01L 3/24

(54) **Vorrichtung zum Bestimmen des Drucks im Zylinder eines Hubkolben-Motors, sowie Dieselmotor mit einer derartigen Vorrichtung**
Device for determining the pressure in a cylinder of a piston engine, and diesel motor provided with such a device
Dispositif pour déterminer la pression dans un cylindre d'un moteur à piston, et moteur diesel équipé d'un tel dispositif

(43) Veröffentlichungstag der Anmeldung: 15.03.1995
(73) Patentinhaber: Wärtsilä NSD Schweiz AG, 8401 Winterthur (CH)
(72) Erfinder: Svimbersky, Karl, CH-8404 Winterthur (CH)
(74) Vertreter: Hammer, Bruno Dr.

(56) Entgegenhaltungen:
- DE-C- 3 933 947
- GB-A- 234 103
- GB-A- 2 041 524
- MESURES REGULATION AUTOMATISME Bd. 53, Nr. 9 , 20. Juni 1988 , PARIS FR Seiten 41 - 46 XP000046254 'MESURES SUR MACHINES TOURNANTES. UNE SOLUTION: LA TELEMESURE.'
- TRANSACTIONS OF THE AMERICAN SOCIETY OF MECHANICAL ENGINEERS, SERIES A: JOURNAL OF ENGINEERING FOR POWER Bd. 89, Nr. 2 , April 1967 , NEW YORK US Seiten 247 - 254 M.H. WESTBROOK U.A. 'THE TELEMETERING OF INFORMATION FROM A WORKING INTERNAL-COMBUSTION ENGINE'

## Beschreibung

Die Erfindung bezieht sich auf eine Vorrichtung gemäss dem Oberbegriff von Anspruch 1.

Bei Hubkolben-Motoren, insbesondere auch bei mehrzylindrigen Grossdieselmotoren wird angestrebt, die Leistung der einzelnen Zylinder möglichst gleich oder wenigstens innerhalb enger Grenzen zu halten. Um eine möglichst hohe Leistung zu erzielen, ist es weiter erforderlich, den Abstand zur Leistungsgrenze klein zu halten.

Bei Grossdieselmotoren ist es bekannt, im Zylinderdeckel sog. Indizierbohrungen anzubringen, welche über einen Indizierhahn direkt mit dem Brennraum verbunden werden können. Mit Drucksensoren in diesen Indizierbohrungen ist es möglich, den Druckverlauf im Brennraum direkt zu bestimmen.

Die Umgebungsbedingungen im Brennraum sind aber derart, dass eine dauernde, genaue Messung des Drucks und damit auch der Zylinderleistung nicht immer gewährleistet ist. Die Sensoren müssen die hohen Temperatur-, Druck-Wechselbelastungen langdauernd, ertragen ohne Schaden zu nehmen. Darüber hinaus sind die Verbrennungsgase chemisch ziemlich aggressiv und es besteht grosse Gefahr von Verkokung der Indizierbohrung und auch für Sensoren. Diese Lösungen sind demnach allein schon aus Kostengründen für andere als kurzzeitige Einsätze, also für Dauerbetrieb nicht tragbar. Somit beschränkt man sich auf temporäre Messungen, indem man die Sensoren nur für periodische Messungen bei offenem Indizerhahn der Indizierbohrung kurzzeitig benutzt.

Um einzelne Zylinder des Motors nicht überzubelasten ist es allerdings erforderlich, einen genügend grossen Leistungs-Sicherheitsabstand zur maximal zulässigen Leistung einzuhalten, so dass gewährleistet ist, dass nie ein einzelner Zylinder die maximal zulässige Leistung überschreitet.

Es ist auch bekannt, über indirekte Messungen, mit Hilfe von am Zylinderdeckel des Motors angebrachten Kraftmessdosen, Verformungen des Zylinderdeckels zu messen und auf der Basis den Druck im Brennraum zu ermitteln. Diese Messvorrichtungen sind relativ häufig mit Vergleichsmessungen nachzueichen und der gemessene Druckverlauf ist immer mit von Störgrössen herrührenden Fehlern behaftet.

Das Dokument DE-C-39 33 947 beschreibt ein Verfahren zum Bestimmen des Verbrennungsdrucks in Hubkolbenmotoren. Aus den zeitlichen Verlauf von Beschleunigungswerten wird der Druckanstieg und der Spitzendruck ermittelt.

Das Dokument GB-A-2 041 524 beschreibt eine Vorrichtung zum Erkennen von Vibrationen/Motorklopfen, bei der ein Transducer verwendet wird. Der Transducer kann ein Drucksensor, ein Beschleunigungsmess-Sensor, ein Temperatursensor oder etwas derartiges sein und ist auf der Kurbelwelle oder einem mit der Kurbelwelle verbunden Teil angebracht.

Aufgabe der Erfindung ist es, eine Vorrichtung zu schaffen, welche die beschriebenen Nachteile nicht aufweist. Erfindungsgemäss ist eine derartige Vorrichtung durch die Merkmale im kennzeichnenden Teil des unabhängigen Anspruchs 1 gekennzeichnet. Ein Dieselmotor nach der Erfindung ist mit einer Vorrichtung nach der vorliegenden Erfindung bestückt. Die abhängigen Ansprüche beziehen sich auf besonders vorteilhafte Weiterbildungen und Ausführungsformen der Erfindung.

Die Umgebungsbedingungen im Kurbelgehäuse oder im Spülluftraum der Kolbenunterseite sind wesentlich vorteilhafter für einen Sensor, was ermöglicht, mit relativ einfachen Mitteln den Druck im Brennraum dauernd zu überwachen. Bei grossen Dieselmotoren treibt der Kolben die Kurbelwelle über eine Kolbenstange, die im wesentlichen in Richtung der Zylinderachse hin und her bewegt wird, einen Kreuzkopf. Dieser wiederum treibt über die zwischen Kreuzkopf und Kurbelwelle angeordnete Schubstange die Kurbelwelle.

Drucksensoren werden mit Vorteil zwischen Kolben und Kolbenstange oder am kreuzkopfseitigen Ende der Kolbenstange angebracht. Am kreuzkopfseitigen Ende der Kolbenstange ist es bei grossen Dieselmotoren vorgesehen, Distanzscheiben einzubauen, um eventuelle Kompressions-Unterschiede zwischen den einzelnen Zylindern eines mehrzylindrigen Motors ausgleichen zu können. An Stelle eines Distanzscheiben kann nun ein als Sensor ausgebildetes Distanzelement eingesetzt werden.

Ein weiteres Problem bei Dieselmotoren ist das Bestimmen des oberen oder unteren Totpunktes, d.h. des oberen oder unteren Umkehrpunktes des Kolbens. Messungen am Schwungrad, das auf der Kurbelwelle montiert ist, können im Betrieb Winkel-Fehlern in der Grössenordnung von mehreren Grad, typisch bis zu 3° behaftet sein, was für weitere Auswertungen zu ungenau sein kann..

Wird nun ein z.B. piëzoelektrischer Beschleunigungssensor, an der Kolbenstange angebracht, so wird es möglich, damit den oberen und den unteren Totpunkt sehr genau zu bestimmten. Mit Vorteil wird der Beschleunigungssensor in unmittelbarer Nähe des Drucksensors, angebracht, bzw. zusammen mit diesem in einer Baueinheit integriert. Dies erlaubt nun, rechnerisch, laufend den Druck in der Brennkammer zu bestimmen, indem die Massen- und Trägheitskräften der Motorteile, welche auf den Drucksensor wirken, von den eigentlichen Druckkräften getrennt ermittelt werden können.

Damit verfügt man über Mittel und Möglichkeiten, z.B. den Zünddruck jedes einzelnen Zylinders wesentlich genauer und näher beim maximal zulässigen Zünddruck einzustellen. Es wird damit auch möglich den Wirkungsgrad jedes Zylinders zu optimieren und somit den gesamten Wirkungsgrad des Motors zu verbessern.

Die Lagerschmierung insbesondere im Teillastbereich ist kritisch, da bei zu hoher Last bei einer bestimmten Schmierleistung Lagerschäden entstehen können, sind Motoren immer mit einer Sicherheitsmargen zu fahren. Diese Sicherheitsmargen können bei einer dauernden Überwachung des Zylinderdrucks, bei gleichzeitig erhöhter Sicherheit gegen Lagerschäden, enger ausgelegt werden.

Mit der laufenden Überwachung der Kolbenkraft ist es weiter möglich, Anzeichen von Kolbenfressern vorzeitig, anhand der typischen Rippligkeit frühzeitig zu erkennen, die sich auch in der Kompressionskurve zeigt. Bevor im Zylinder ein fataler Schaden entstehen kann, wird es z.B. möglich, die erforderlichen Gegenmassnahmen wie Erniedrigen der Zylinderleistung, Erhöhen der Schmiermittelzufuhr einzuleiten.

Die Vorrichtung zum Bestimmen des Drucks im Brennraum eines Hubkolben-Motors, umfasst Sensoren zum Messen von Druckkräften und/oder Dehnungen an einem vom Kolben des Motors angetriebenen Bauteil.

Anhand der auf einen, vom Kolben angetriebenen Bauteil des Motors in Richtung der Kolbenbewegung ausgeübten und gemessene Druckkräfte, wird auf die Druckkräfte im Brennraum geschlossen. Die elektrischen Messwert-Signale dienen als Grundlage zum Berechnen der Drucke im Brennraum. Mit Vorteil werden auch die Beschleunigungen des Motorteils gemessen, welche das Motorteil, an welchem die Kraft- oder Druckkraftmessungen erfolgen, gemessen. Damit wird es möglich die Trägheits- und Massenkräfte in das Bestimmen des Zylinderdrucks mit einzubeziehen, was das einfache und zuverlässige Bestimmen des Zylinderdrucks über den gesamten Drehwinkelbereich der Kurbelwelle gestattet. Mit dem Beschleunigungssignal kann der obere Totpunkt (OTP) und der untere Totpunkt (UTP) jedes Zylinders sehr genau bestimmt werden, was für die weitere Signalauswertung von grosser Bedeutung ist.

Die Vorrichtung ist besonders gut für langsamlaufende Grossdieselmotoren geeignet, welche im Drehzahlbereich von etwa 50 bis 200 U/min arbeiten. Bei mehrzylindrigen Motoren wird mit Vorteil jeder Zylinder mit Sensoren überwacht, deren Messerte einer gemeinsamen Datenaufbereitungseinheit zugeführt werden. Obschon es zweckmässig ist bei mehrzylindrigen Motoren von jedem Zylinder eine separate Übertragungslinie zur Signalaufbereitungeinheit zu führen, kann auch vorgesehen sein, die von mehreren Zylindern stammenden Messsignale über wenigstens z.T. gemeinsame Übertragungswege zu führen.

Die Erfindung wird nachstehend anhand der Figuren, welche Ausführungsbeispiele der Vorrichtung schematisch dargestellt zeigen, näher erläutert.

Es zeigen:

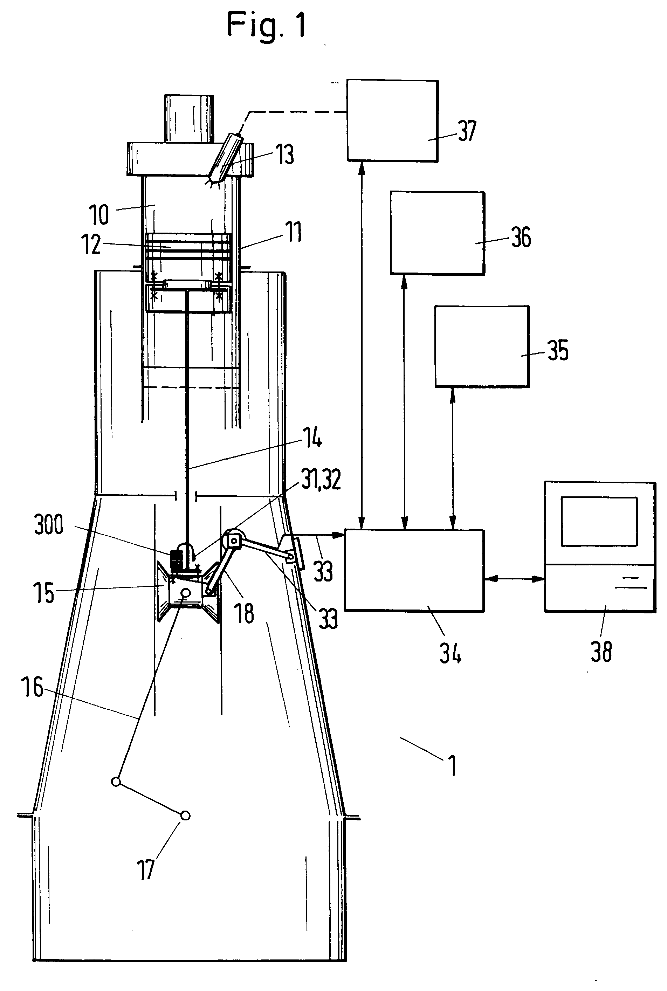

- Fig. 1: In einem schematischen Seitenschnitt einen Dieselmotor mit einer Vorrichtung nach der Erfindung, bei der die Sensoren am kreuzkopfseitigen Ende der Kolbenstange angeordnet sind und die Sensor-Signale über Kabel an eine Datenaufbereitungs-Einheit übertragen werden;

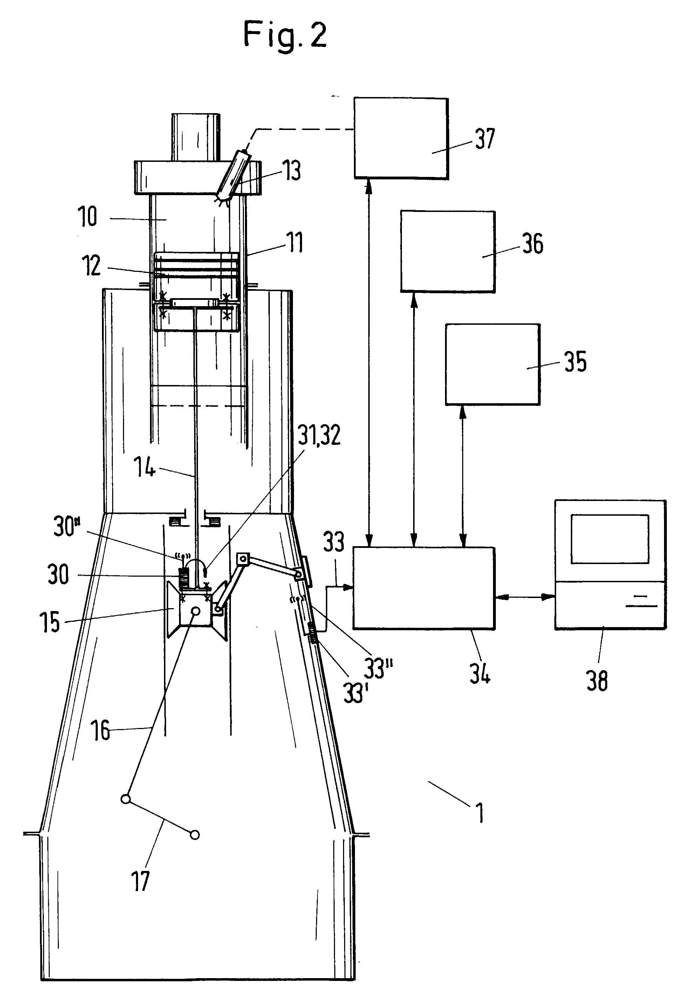

- Fig. 2: In einem schematischen Seitenschnitt einen Dieselmotor mit einer Vorrichtung nach der Erfindung, bei der die Sensoren am kreuzkopfseitigen Ende der Kolbenstange angeordnet sind und die Sensor-Signale drahtlos zu einem Empfänger im Kurbelgehäuse und von dort zur Datenaufbereitungs-Einheit übertragen werden;

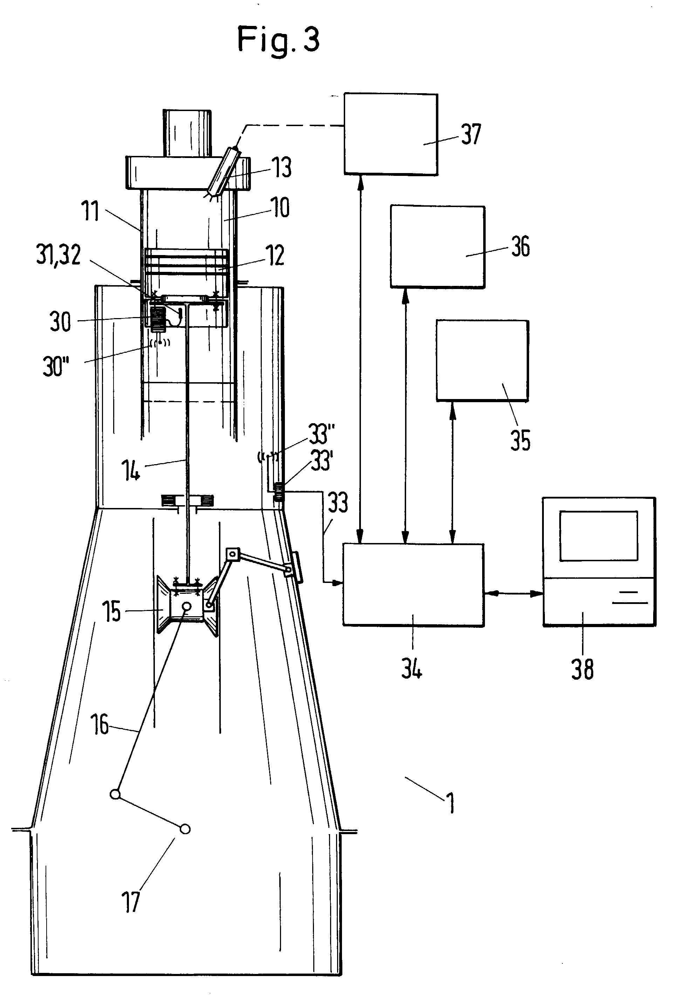

- Fig. 3: In einem schematischen Seitenschnitt einen Dieselmotor mit einer Vorrichtung nach der Erfindung, bei der die Sensoren am kolbenseitigen Ende der Kolbenstange angeordnet sind und die Sensor-Signale drahtlos zu einem Empfänger im Kurbelgehäuse und von dort zur Datenaufbereitungs-Einheit übertragen werden.

Fig. 1, Fig 2 und Fig. 3 zeigen im Schnitt den Gross-Dieselmotor 1 mit dem Zylinder 11, in welchem der Kolben 12 geführt ist. Der Brennstoff wird mit der Einspritzdüse 13 in den Brennraum 10 eingespritzt. Der Kolben 12 treibt über die Kolbenstange 14, den Kreuzkopf 15 und die Schubstange 16, auch Pleuelstange genannt, die Kurbelwelle 17 des Motors 1.

Mit dem Sensor 31 zum Messen von Druckkräften und dem Sensor 32 zum Messen von Beschleunigungen, die im Dieselmotor von Fig 1 am kreuzkopfseitigen Ende der Kolbenstange 14 angebracht sind, werden die Druckkraft, sowie die Beschleunigung welche die Kolbenstange 14 erfährt gemessen. Die Signale können, wie hier gezeigt in einem Verstärker 300 vorverstärkt werden, bevor sie über die Signal- und Versorgungsleitung 33 der Signalaufbereitung 34 zugeführt werden. Im gezeigten in Fig. 1 Beispiel ist die Leitung 33 entlang dem Kniehebel 18 der Lagerschmierung geführt.

Die mit Hilfe der Datenaufbereitung 34 werden die Steuer- und Regelsignale für die Brennstoffeinspritzung 13, 37 das Überwachungs- und Alarmsystem 36 sowie das Diagnose-System 35 aufgrund der mit den Sensoren 31, 32, gemessenen Werten aufgearbeitet. Die Datenaufbereitung wird im gezeigten Beispiel von einem Computer 38 unterstützt. Die verschiedenen Werte der Druckkurven, Graphiken, Protokolle können auf dem Bildschirm des Computers 38 als Tabellen und/oder Kurven dargestellt oder mit einem hier nicht gezeigten Drucker ausgedruckt werden.

Alarm kann beispielsweise ausgelöst werden, wenn ein absoluter Grenzwert wie der höchstzulässige Zylinderdruck überschritten wird oder wenn die Druckkurve des Druckverlaufs einen Spitzengrenzwert überschreitet. Alarm kann auch ausgelöst werden, wenn sich ein Kolbenfresser anhand der Verlaufs der Zylinderdruck-Kurve ankündigt.

Mit der Vorrichtung nach der Erfindung kann auch der Gleichlauf eines mehrzylindrigen Motors, die optimale Verbrennung des Brennstoffs im Brennraum oder die Einspritzwerte der Brennstoffeinspritzung überwacht werden.

Mit der Brennstoff-Einspritzsteuerung werden beispielsweise Einspritzmenge, Einspritzbeginn, Einspritzende und/oder Einspritzdruck beeinflusst.

Bei der erfindungsgemässen Vorrichtung von Fig. 2 werden die vorverstärkten Messwertsignale mit einem Sender 30, mit der Antenne 30'', zum Empfänger 33' mit der Antenne 33'' gesendet und von dort über die Leitung 33 zur Datenaufbereitung 34 übertragen. Die weitere Auswertung und Aufbereitung der Messwert-Signale kann auf gleiche Weise wie anhand der Fig. 1 schon beschrieben, erfolgen.

In Fig. 3 ist ein Schnitt durch einen Dieselmotor gezeigt, bei welchem die Vorrichtung nach der Erfindung am kolbenseitigen Ende der Kolbenstange 14 angeordnet ist. Die Sensoren der Vorrichtung können bei dieser Anordnung zwischen Kolben und Kolbenstange, zwischen Koben und Kolbenauflage und/oder in der Kolbenstange angeordnet sein.

Auch bei dieser Anordnung werden die vorverstärkten Messwertsignale von einem Sender 30, mit der Antenne 30'', zum Empfänger 33' mit der Antenne 33'' gesendet und von dort über die Leitung 33 zur Datenaufbereitung 32 übertragen. Die weitere Auswertung und Aufbereitung der Messwert-Signale kann wiederum auf gleiche Weise wie anhand der Fig. 1 schon beschrieben, erfolgen. Die Sender 30 und Empfänger 33' von Fig. 2 und Fig. 3 können beispielsweise mit Batterien betrieben werden.

Datenaufbereitung, Brennstoffeinspritzung, Überwachungs-, Alarmsystem sowie Diagnosemodul können gemeinsam mit dem Computer zu einer Auswerte-, Steuer- und Regeleinheit zusammengefasst werden. Die Algorithmen und Verfahren zum Berechnen der gewünschten Daten, wie etwa des Drucks im Brennraum sind dem Fachmann bekannt und brauchen hier nicht besonders dargestellt oder diskutiert zu werden.

## Patentansprüche

1. Vorrichtung zum Bestimmen des Drucks im Brennraum eines Hubkolben-Motors (1), mit Mitteln zum Messen von Druckkraft und/oder Zugkraft (31) an einem vom Kolben (12) angetriebenen Bauteil (14) des Motors (1) und mit Mitteln (34, 38) zum Bestimmen der Druckwerte im Brennraum (10) aufgrund von an dem bewegten Motorteil (14) in Richtung der Bewegung des Kolbens (12) ermittelten Druckkraftwerten, wobei den Druckkraftwerten entsprechende elektrischen Signale erzeugt werden, dadurch gekennzeichnet dass
Mittel (32) zum Messen von Beschleunigungen des bewegten Motorteils (14), an welchem die Druckkraftwerte ermittelt werden, vorhanden sind, wobei den Beschleunigungswerten entsprechende elektrische Signale erzeugt werden, welche den Mitteln (34, 38) zum Bestimmen der Druckwerte zugeführt werden, wobei in diesen Mitteln die Massen- und Trägheitskräfte der bewegten Motorteile (14) ermittelt werden,
und mit Mitteln (34, 38) zum Bestimmen der eigentlichen Druckkraftwerte, getrennt von den Massen- und Trägheitskräften.

2. Vorrichtung nach Anspruch 1, bei welcher das vom Kolben angetriebene Bauteil des Motors (1) die Kolbenstange (14) oder der Kolben (12) ist.

3. Vorrichtung nach Anspruch 1 oder 2, bei welcher das Ausgangssignal der Mittel zum Messen von Drücken und/oder Dehnungen (31, 300) auf Druckwerte im Brennraum (10) genormt ist.

4. Vorrichtung nach einem der Anspruche 1 bis 3, bei welcher die Mittel (32) zum Messen von Beschleunigungen und die Mittel zum Messen von Druckkräften (31) auf dem selben Bauteil (14) des Motors (1), vorzugsweise in unmittelbarer Nähe zueinander oder in einem einzigen Sensorbauteil (31, 32) integriert, angebracht sind.

5. Vorrichtung nach einem der Ansprüche 1 bis 4, mit Mitteln (30, 30") zum Übertragen der Druck- und/oder Beschleunigungs-Messwert-Signale auf Signalauswertemittel (33'', 33', 33, 34 - 38), welche auf einer Basis am oder ausserhalb des Motorgehäuses angeordnet sind.

6. Vorrichtung nach Anspruch 5, mit einer Leiteranordnung (33) für das Übertragen der Messwert-Signale von den Sensoren (31, 32) zu den Datenaufbereitungsorganen (34 - 38).

7. Vorrichtung nach Anspruch 6, bei welcher der Leiter (33) entlang einem Kniehebel (18) geführt ist.

8. Vorrichtung nach Anspruch 5, mit Sender (30, 30") und Empfänger (33'', 33) zum drahtlosen Übertragen von Messwertsignalen.

9. Vorrichtung nach einem der Ansprüche 1 bis 8, bei welcher Mittel zum Messen von Druckkräften und Beschleunigungen piëzoelektrische Sensoren (31, 32) sind.

10. Vorrichtung nach einem der Ansprüche 1 bis 9, mit Mitteln (34, 35, 36, 38) zum Bestimmen des mittleren Zünddrucks der Zylinder (MIP Means Indicated Pressure), und/oder des Kolbenkraftverlaufs.

11. Dieselmotor, insbesondere langsamlaufender Zweitakt-Grossdieselmotor (1) mit einer Vorrichtung nach einem der Ansprüche 1 bis 10.

## Claims

1. Apparatus for the determination of the pressure in the combustion chamber of a reciprocating piston engine (1), characterised by means for the measurement of compression force and/or tension force (31) at a component of the engine (1) driven by the piston (12) and for the determination of the pressure values in the combustion chamber (10) on the basis of pressure values determined at the movable engine component (14) in the direction of movement of the piston (12), whereby electrical signals corresponding to the compression force values are produced.

2. Apparatus in accordance with claim 1, in which the component of the engine (1) driven by the piston is the piston conrod (14) or the piston (12).

3. Apparatus in accordance with claim 1 or 2, in which the output signal of the means for the measurement of compression and/or extension values (31, 300) is normalised to pressure values in the combustion chamber (10).

4. Apparatus in accordance with claim 1 or 2, comprising means (32) for the measurement of accelerations of the movable motor component (14) at which the compression force values are determined, whereby electrical signals corresponding to the acceleration values are produced.

5. Apparatus in accordance with claim 4, in which the means for the measurement of accelerations and the means for the measurement of compression forces (31) are arranged on the same component (14) of the engine (1), preferably in direct proximity to one another or integrated in a single sensor component (31, 32).

6. Apparatus in accordance with one of the claims 1 to 5, comprising means (30, 30") for transferring the measured compression and/or acceleration value signals to signal evaluation means (33", 33', 33, 34-38) which are arranged on a base at or outside of the engine housing.

7. Apparatus in accordance with claim 6, comprising a conductor arrangement (33) for transferring the measurement value signals from the sensors (31, 32) to the data processing members (34-38).

8. Apparatus in accordance with claim 7, in which the conductor (33) is guided along an articulated lever (18).

9. Apparatus in accordance with claim 6, comprising a transmitter (30, 30") and a receiver (33", 33) for the wireless transfer of measurement value signals.

10. Apparatus in accordance with one of the claims 1 to 9, in which means for the measurement of compression forces and accelerations are piezoelectric sensors (31, 32).

11. Apparatus in accordance with one of the claims 1 to 10, comprising means (34, 35, 36, 38) for the determination of the average ignition point pressure of the cylinder (MIP Mean Indicated Pressure) and/or of the piston force profile.

12. Diesel engine, in particular a slow running two-stroke diesel engine (1), comprising an apparatus in accordance with one of the claims 1 to 11.

## Revendications

1. Dispositif pour déterminer la pression dans la chambre de combustion d'un moteur à piston alternatif (1), avec des moyens pour mesurer la force de pression et/ou la force de traction (31) à un composant (14) du moteur (1) entraîné par le piston (12) et avec des moyens (34, 38) pour déterminer les valeurs de pression dans la chambre de combustion (10) sur la base de valeurs de force de pression obtenues au composant de moteur mobile (14) en direction du déplacement du piston (12), où sont produits des signaux électriques correspondant aux valeurs de force de pression, caractérisé en ce que sont prévus des moyens (32) pour mesurer des accélérations de la partie de moteur mobile (15) à laquelle sont déterminées les valeurs de force de pression, où sont produits des signaux électriques correspondant aux valeurs d'accélération, qui sont amenés aux moyens (34, 38) pour déterminer les valeurs de pression, où sont déterminées dans ces moyens les forces de masse et d'inertie des parties de moteur mobiles (14), et avec des moyens (34, 38) pour déterminer les valeurs de force de pression proprement dites, séparément des forces de masse et d'inertie.

2. Dispositif selon la revendication 1, où la partie du moteur (1) entraîné par le piston est la tige de piston (14) ou le piston (12).

3. Dispositif selon la revendication 1 ou 2, où le signal de départ des moyens pour mesurer des pressions et/ou extensions (31, 300) est normalisé à des valeurs de pression dans la chambre de combustion (10).

4. Dispositif selon l'une des revendications 1 à 3, où les moyens (32) pour mesurer des accélérations et les moyens pour mesurer des forces de pression (31) sont disposés sur le même composant (14) du moteur (1), de préférence au voisinage direct les uns des autres ou sont intégrés dans un seul composant de capteur (31, 32).

5. Dispositif selon l'une des revendications 1 à 4, avec des moyens (30, 30") pour transférer les signaux de valeurs de mesure de pression et/ou d'accélération à des moyens d'évaluation de signaux (33", 33', 33, 34-38) qui sont disposés sur une base au carter de moteur ou à l'extérieur de celui-ci.

6. Dispositif selon la revendication 5, avec un agencement de conducteur (33) pour transférer les signaux de valeurs de mesure des capteurs (31, 32) aux organes de traitement de données (34-38).

7. Dispositif selon la revendication 6, où le conducteur (33) est guidé le long d'un levier coudé (18).

8. Dispositif selon la revendication 5, avec des émetteurs (30, 30") et des récepteurs (33", 33) pour la transmission sans fil de signaux de valeurs de mesure.

9. Dispositif selon l'une des revendications 1 à 8, où les moyens pour mesurer des forces de pression et des accélérations sont constitués par des capteurs piézo-électriques (31, 32).

10. Dispositif selon l'une des revendications 1 à 9, avec des moyens (34, 35, 36, 38) pour déterminer la pression d'allumage moyenne des cylindres (pression moyenne indiquée MIP) et/ou de la marche de la force du piston.

11. Moteur diesel, notamment grand moteur diesel à deux temps fonctionnant lentement (1) avec un dispositif selon l'une des revendications 1 à 10.
